Europäisches Patentamt

European Patent Office

Office européen des brevets

(19)

(11) EP 0 633 231 B1

# (12) FASCICULE DE BREVET EUROPEEN

(45) Date de publication et mention
de la délivrance du brevet:
03.06.1998 Bulletin 1998/23

(51) Int. Cl.⁶: $C04B\ 12/00$

(21) Numéro de dépôt: 94401440.6

(22) Date de dépôt: 27.06.1994

(54) **Résines minérales, leur procédé de préparation et matériaux pour la protection thermique**

Anorganische Harze, Verfahren zu ihrer Herstellung und Wärmeschutzartikeln

Inorganic resins, process for their preparation and thermal protection articles

(84) Etats contractants désignés:
**BE DE FR GB IT**

(30) Priorité: **06.07.1993 FR 9308238**

(43) Date de publication de la demande:
**11.01.1995 Bulletin 1995/02**

(73) Titulaire:
**SOCIETE NATIONALE
DES POUDRES ET EXPLOSIFS
F-75181 Paris Cédex 04 (FR)**

(72) Inventeurs:
• **Neel, Ludovic
F-76490 Villequier (FR)**
• **l'Hernault, Claude
F-91000 Evry (FR)**

(74) Mandataire: **Pech, Bernard et al
Sté Nationale des Poudres et Explosifs
12, quai Henri IV
75181 Paris Cédex 04 (FR)**

(56) Documents cités:
**EP-A- 0 550 332          WO-A-91/13830**

**Description**

L'invention concerne de nouvelles résines minérales à base de boroaluminosilicates alcalins et leur procédé de préparation. Elle concerne en particulier des résines qui durcissent à basse température et forment des matrices minérales qui présentent un fort caractère endothermique lorsqu'elles sont exposées à la chaleur. Elles sont très utiles par conséquent pour fabriquer des matériaux de protection thermique et en particulier des matériaux coupe-feu.

Des résines minérales à base d'aluminosilicates alcalins ont été décrites notamment dans les demandes de brevet français FR 2 489 291 et 2 659 319 mais les matériaux fabriqués au moyen de ces résines qui sont dépourvues de bore présentent des propriétés mécaniques faibles dès que la température dépasse 200° C. Lorsqu'on les utilise comme barrières anti-feu, les gradients thermiques importants qui se produisent en leur sein provoquent dès 200° C des fissurations ou des déformations. On a aussi constaté que ces matériaux se modifiaient au cours du temps même à température ambiante. Des fissures apparaissent ainsi que des efflorescences en surface qui montrent que les résines ne sont pas stables chimiquement. D'autre part certains composés utilisés pour préparer les résines, tels que la silice thermique, ont des propriétés très variables suivant la source d'approvisionnement et il est alors difficile d'obtenir des résines présentant les mêmes caractéristiques au moyen des mêmes formulations. Un autre désavantage des résines de l'art antérieur est que leur durcissement ne peut être effectué immédiatement. Il est en effet nécessaire de les laisser au repos un certain temps, souvent quelques heures avant cette opération, ce qui allonge la durée d'obtention des matériaux.

Il existait donc un besoin de nouvelles résines minérales qui ne possèdent pas les inconvénients des résines de l'art antérieur.

L'invention a pour objet de nouvelles résines minérales à base de boroaluminosilicates alcalins obtenues de façon simple et rapide à partir de composés facilement disponibles avec des caractéristiques constantes et qui permettent d'obtenir des matériaux stables dans le temps, conservant leurs propriétés mécaniques aux températures supérieures à 200° C et utiles comme matériaux de protection thermique.

Les nouvelles résines minérales selon l'invention comprennent, avant durcissement, les éléments minéraux à l'état réactif, le bore pouvant être aussi en état de sursaturation, dans les proportions suivantes exprimées par leur rapport molaire d'oxydes :

$$2 \leq SiO_2/Al_2O_3 \leq 4$$
$$1,3 \leq X_2O/Al_2O_3 \leq 3,8$$
$$10 \leq H_2O/Al_2O_3 \leq 28$$
$$0,5 < B_2O_3/Al_2O_3 \leq 2,0$$

$X_2O$ représentant un ou plusieurs oxydes alcalins choisis parmi $Na_2O$, $K_2O$ et $Li_2O$.

Avantageusement $X_2O$ représente $Na_2O$, $K_2O$ ou un mélange de $Na_2O$ et de $K_2O$, de $Li_2O$ et de $Na_2O$, de $Li_2O$ et de $K_2O$ ou de $Li_2O$, de $Na_2O$ et de $K_2O$.

Les résines préférées selon l'invention sont celles dont les rapports molaires des oxydes ont les valeurs suivantes :

$$3,0 \leq SiO_2/Al_2O_3 \leq 3,8$$
$$1,5 \leq X_2O/Al_2O_3 \leq 3,6$$
$$13,0 \leq H_2O/Al_2O_3 \leq 19,5$$
$$0,5 < B_2O_3/Al_2O_3 \leq 1,8$$

$X_2O$ représentant l'oxyde de potassium ou les valeurs suivantes :

$$2,0 \leq SiO_2/Al_2O_3 \leq 3,9$$
$$1,4 \leq X_2O/Al_2O_3 \leq 3,0$$
$$10 \leq H_2O/Al_2O_3 \leq 28,0$$
$$0,5 < B_2O_3/Al_2O_3 \leq 1,3$$

$X_2O$ représentant l'oxyde de sodium ou un mélange d'oxyde de sodium et de potassium.

Elles durcissent par réaction interne de type hydrolyse-polycondensation.

Les oxydes alcalins, de silicium, d'aluminium ainsi que l'oxyde de bore dissout s'associent pour former le squelette de la résine.

Une fois durcies les résines forment des matrices qui possèdent de bonnes propriétés physiques et mécaniques et un excellent caractère endothermique.

Elles peuvent être utilisées comme protection contre des agressions thermiques en tant que structure autoportante ou revêtement.

EP 0 633 231 B1

Une ou plusieurs charges très diverses, organiques, minérales et/ou métalliques peuvent être incorporées dans les résines avant durcissement. Les charges sont généralement sous forme granulaire ou fibreuse. Avantageusement ce sont des substances minérales.

La proportion de charges est au maximum de 50% en volume par rapport au volume total de la résine et des charges.

Comme exemple de charges, on peut citer les sulfates, les oxydes et les hydroxydes alcalino-terreux, en particulier ceux de calcium, de magnésium, l'alumine, les hydrates d'alumine, l'oxyde de zinc, le borax et les aluminosilicates.

D'autres constituants habituels de résines pourront également être ajoutés tels que des pigments, des adjuvants.

Un autre objet de la présente invention concerne le procédé de préparation de ces nouvelles résines.

Ce procédé consiste à effectuer un mélange homogène des deux précurseurs suivants préparés séparément :

I) un précurseur qui est une poudre constituée d'un aluminosilicate obtenu par amorphisation d'une argile 1 : 1 dans laquelle le rapport atomique $\frac{Si}{Al}$ est égal à 1 ;

II) Un précurseur liquide qui est une solution aqueuse alcaline contenant, à l'état dissous, au moins un élément alcalin choisi parmi le sodium, le potassium et le lithium, du bore et éventuellement du silicium, le bore pouvant être présent en quantité supérieure à sa saturation ;

les quantités des différents constituants étant déterminées pour que leurs rapports molaires dans le mélange exprimés en terme d'oxyde, aient les valeurs suivantes :

$2 \leq SiO_2/Al_2O_3 \leq 4$
$1,3 \leq X_2O/Al_2O_3 \leq 3,8$
$10 \leq H_2O/Al_2O_3 \leq 28$
$0,5 < B_2O_3/Al_2O_3 \leq 2,0$

$X_2O$ représentant un ou plusieurs oxydes alcalins choisis parmi $Na_2O$, $K_2O$ et $Li_2O$.

On obtient ainsi une résine suffisamment fluide qui peut être durcie immédiatement.

Avantageusement $X_2O$ représente $Na_2O$, $K_2O$ ou un mélange de $Na_2O$ et de $K_2O$, de $Li_2O$ et de $Na_2O$, de $Li_2O$ et de $K_2O$ ou de $Li_2O$, de $Na_2O$ et de $K_2O$.

Selon un procédé préféré, les rapports molaires des oxydes dans le mélange ont les valeurs suivantes :

$3,0 \leq SiO_2/Al_2O_3 \leq 3,8$
$1,5 \leq X_2O/Al_2O_3 \leq 3,6$
$13,0 \leq H_2O/Al_2O_3 \leq 19,5$
$0,5 < B_2O_3/Al_2O_3 \leq 1,8$

$X_2O$ représentant l'oxyde de potassium ou les valeurs suivantes :

$2,0 \leq SiO_2/Al_2O_3 \leq 3,9$
$1,4 \leq X_2O/Al_2O_3 \leq 3,0$
$10 \leq H_2O/Al_2O_3 \leq 28,0$
$0,5 < B_2O_3/Al_2O_3 \leq 1,3$

$X_2O$ représentant l'oxyde de sodium ou un mélange d'oxyde de sodium et de potassium.

Les argiles 1 : 1 qui constituent la matière première du précurseur en poudre se trouvent dans le commerce. Il est préférable qu'elles soient finement broyées, et, pour obtenir une meilleure réactivité, on utilise de préférence celles dont les grains ont une dimension inférieure à 5 $\mu$m. En général l'argile utilisée est du kaolin et de préférence dont la teneur en kaolinite est supérieure à 70%.

Les argiles doivent être amorphisées afin de les rendre réactives avec le précurseur liquide. L'amorphisation peut être obtenue selon des procédés connus. Un procédé qui convient bien dans le cadre de la présente invention est le traitement thermique des argiles de préférence à une température comprise entre 600° C et 1100° C. La durée du traitement est fonction de la température. A 700° C cette durée est de l'ordre de quelques heures. A 1000° C quelques secondes peuvent suffire pour obtenir cette amorphisation. Une autre façon de réaliser l'amorphisation des argiles consiste à les disperser dans des acides forts et concentrés tels que l'acide chlorhydrique, l'acide sulfurique ou l'acide nitrique. On peut effectuer successivement plusieurs traitements d'amorphisation différents. Lorsqu'on effectue les deux traitements précédents on préfère généralement réaliser le traitement à l'acide avant le traitement thermique. L'amorphisation des argiles peut être constatée par l'examen de leurs spectres de diffraction aux rayons X dans lesquels ne doit apparaître ni le spectre de cristallisation de la kaolinite, ni les spectres des phases cristallines qui naissent à une température supérieure à 1100° C.

Le précurseur liquide est une solution aqueuse qui doit contenir, à l'état dissous, au moins un élément alcalin choisi parmi le sodium, le potassium et le lithium, du bore, celui-ci pouvant être en état de sursaturation, et éventuellement du silicium.

Afin d'obtenir un précurseur liquide stable il est nécessaire d'une part que tous les constituants soient bien dissous pour former une solution. Cet état dissous est également nécessaire pour que ces constituants puissent former avec les autres constituants du précurseur en poudre le squelette de la résine. D'autre part le précurseur liquide ne doit pas être trop visqueux afin de pouvoir être mélangé avec le précurseur en poudre et afin d'obtenir une résine suffisamment fluide qui puisse être moulée ou façonnée et contenir éventuellement des charges ou qui puisse servir à l'imprégnation. De préférence la viscosité du précurseur liquide est inférieure ou égale à 30 poises.

Les éléments alcalins sont généralement introduits dans le milieu aqueux, au moyen des hydroxydes alcalins, Na0H, K0H et/ou Li0H.

Le bore est introduit au moyen d'une de ses formes et/ou d'au moins un de ses composés capable de se dissoudre dans un milieu aqueux et alcalin tels que par exemple un oxyde, sel, acide ou hydroxyde. Avantageusement on utilise l'acide orthoborique. Lorsqu'on souhaite obtenir une résine avec une grande proportion de bore, le précurseur liquide doit contenir une très grande quantité de cet élément et il est possible que pour un rapport $B_2O_3/Al_2O_3 \geq 1,1$, la solution contienne un précipité à base de bore.

Lorsqu'on veut introduire du silicium dans le précurseur liquide, celui-ci est ajouté sous la forme d'un silicate alcalin, de sodium et/ou de potassium dans le milieu aqueux.

Pour obtenir le précurseur liquide on préfère généralement introduire dans l'eau d'abord le(s) hydroxyde(s) alcalin(s) puis éventuellement le(s) silicate(s) et enfin le(s) composé(s) du bore. On peut chauffer le mélange afin de favoriser une bonne homogénéité.

Le mélange du précurseur liquide et du précurseur en poudre s'effectue à la température ambiante, par exemple au moyen d'un mélangeur à hélice. On obtient rapidement une résine homogène coulable ou façonnable qui pourra servir à fabriquer des objets par les techniques habituelles notamment par moulage. Cette résine peut ensuite être durcie sans qu'un temps de repos soit nécessaire. Le durcissement résulte de la réaction qui se produit et qui peut s'apparenter à une réaction d'hydrolyse-polycondensation. On peut faire durcir la résine telle quelle ou bien après l'avoir mélangée avec des charges minérales, métalliques et/ou organiques telles que précédemment décrites ou après avoir imprégné des fibres ou des matériaux comprenant des fibres tels que des mats et des tissus.

Le durcissement peut être effectué à une température comprise entre 0° et 150° C. Jusqu'à la température ambiante, voisine de 20° C, il est lent. On préfère chauffer la résine à une température comprise entre 40° et 120° C. Le temps de durcissement varie en fonction de la formulation de la résine, de la température et du mode de chauffage utilisé. Au moyen d'un chauffage classique par apport thermique extérieur, certaines formulations durcissent en moins d'une heure à 80° C. Au moyen d'un chauffage par micro-ondes quelques secondes peuvent suffire.

Il est nécessaire que le durcissement soit réalisé en présence de la totalité de l'eau présente dans la résine. On doit opérer par conséquent en milieu hermétique ou saturé en eau.

Lorsque la réaction de durcissement est très avancée, on peut la laisser se terminer dans les conditions de température et d'hygrométrie ambiantes, de préférence après avoir au préalable refroidi le matériau jusqu'à une température voisine de la température ambiante. Un séchage, par exemple en étuve, peut éventuellement être effectué ensuite.

Lorsqu'on fabrique des objets moulés avec les résines selon l'invention, il ne se produit pratiquement pas de retrait. Les objets ont une bonne dureté de surface. Ils ne présentent ni fissuration ni déformation et possèdent de bonnes propriétés mécaniques.

En raison de leur forte endothermicité, les résines selon la présente invention sont particulièrement utiles comme matériaux de protection thermique et en particulier comme barrière anti-feu. Elles peuvent être moulées sous différentes formes et par exemple sous forme de panneaux. Les tests effectués avec des panneaux d'épaisseur comprise entre 10 et 30 mm d'épaisseur montrent que ces matériaux sont tout à fait utilisables contre des agressions thermiques telles qu'en particulier une montée progressive en température jusqu'à 1200° environ ou un flash thermique d'une dizaine de minutes à 850° C.

On peut encore améliorer le caractère d'isolation thermique des objets moulés à base des résines selon l'invention en liant sur une ou plusieurs faces de l'objet un élément réflecteur de chaleur qui peut être constitué par exemple par une couche très fine de mica ou de paillettes d'un métal amorphe appelé "verre métallique" placée sur la ou les face(s) de l'objet et maintenue par un mat de verre imprégné d'une résine minérale non chargée telle que décrite précédemment qui par durcissement effectuera la liaison. L'élément réflecteur est placé sur une ou plusieurs faces à l'intérieur du moule qui recevra la résine et se trouvera lié à(aux) face(s) de l'objet après durcissement de l'ensemble.

Les exemples qui suivent illustrent l'invention sans toutefois la limiter.

EP 0 633 231 B1

<u>Exemples 1 à 8</u>

On prépare différentes résines selon l'invention à partir des composés et de la manière indiqués ci-dessous :

Précurseur en poudre :

On utilise du kaolin amorphisé par traitement thermique de provenances diverses :

$A_1$ : Kaolin "B 24" commercialisé par la société Blancs Minéraux de Paris, traité thermiquement à 800° C pendant 4 heures.
$A_2$ : Kaolin "GRADE B" commercialisé par la société English China Clay, traité thermiquement à 800° C pendant 4 heures.
$A_3$ : Kaolin "SUPREME" commercialisé par la société English China Clay, traité thermiquement à 800° C pendant 4 heures.
$A_4$ : Kaolin "Polestar 501" commercialisé par la société English China Clay.

Précurseur liquide :

On l'obtient en introduisant de façon progressive dans de l'eau distillée différentes quantités des composés suivants :

la soude en pastilles ($m_N$)
la potasse en pastilles ($m_K$)
le silicate de potassium de formule $K_2O, 3SiO_2, 3H_2O$ ($n_K$)
le silicate de sodium de formule $Na_2O, 3SiO_2, 3H_2O$ ($n_N$)
l'acide orthoborique en poudre, $H_3BO_3$ (aob)

Les termes entre parenthèses sont utilisés dans les tableaux suivants pour représenter les quantités en grammes des composés. La lettre h sera utilisée pour désigner la quantité d'eau en grammes.
Généralement on introduit en premier le ou le(s) hydroxyde(s) ensuite le ou le(s) silicate(s) puis l'acide orthoborique.
On agite et on chauffe éventuellement le mélange afin d'obtenir une bonne homogénéité.
Pour obtenir la résine, on effectue le mélange des deux précurseurs à la température ambiante en incorporant progressivement la poudre dans la solution liquide dans des proportions indiquées par le rapport suivant :

$$\frac{L}{A} = \frac{\text{masse du précurseur liquide}}{\text{masse du précurseur poudre}}$$

On agite pendant 15 minutes environ puis lorsqu'on veut obtenir une résine chargée on incorpore 10% en volume par rapport au volume total de la résine et des charges, d'une ou de plusieurs des charges suivantes. Lorsqu'il y a plusieurs charges, elles sont ajoutées en proportions égales. Les abréviations utilisées sont indiquées entre parenthèses.

Alumine : "SPHER 200-500" vendu par la société DURMAX (Sp25)
BORAX (Bx)

Aluminosilicates :     PORAVER 1-2 (P12)
                       PORAVER 2-4 (P24)
                       PORAVER 0,25-0,5 (P02505)

vendus par la société PORAVER
Alumine trihydratée (ATH)
Oxyde de zinc en poudre (Z)
Oxyde de magnésium, densité 0,2 (M)
Hydroxyde de calcium (C)
Sulfate de calcium (SC)
Sulfate de magnésium (SM).

On mélange vigoureusement la résine et les charges pendant 10 minutes environ.
La résine seule ou contenant les charges est ensuite coulée dans une boîte en polyéthylène qui est fermée hermétiquement. On ne laisse pas reposer l'ensemble, le durcissement est effectué immédiatement en plaçant la boîte dans une étuve à 60° C. A cette température la prise en masse de la résine chargée ou non s'effectue généralement en moins de 15 heures. Certaines compositions durcissent en moins de 5 heures.

On démoule la pièce obtenue une heure après la sortie de l'étuve et on note l'aspect de cette pièce selon les critères suivants :

a : pièce monolithique, résistance à une pression manuelle bonne - surface dure non rayée par l'ongle - pas de retrait ni de déformation

b : pièce monolithique, résistance à une pression manuelle et surface dure obtenues après avoir laissé le durcissement se terminer à la température ambiante - pas de fissuration ni de déformation.

Les résultats des essais sont rassemblés dans les tableaux I et II ci-après.
Les rapports molaires d'oxydes sont désignés par les abréviations suivantes :

S : $SiO_2/Al_2O_3$
K : $K_2O/Al_2O_3$
N : $Na_2O/Al_2O_3$
NK : $Na_2O + K_2O/Al_2O_3$
H : $H_2O/Al_2O_3$
B : $B_2O_3/Al_2O_3$

Dans la ligne composition de prise en masse lorsque la résine est durcie seule elle est notée par R. Lorsqu'elle contient des charges celles-ci sont indiquées par leurs abréviations. Lorsque plusieurs types de charges sont utilisés, ils sont indiqués entre parenthèses.

Exemples 9 et 10

Afin de montrer la propriété de protection thermique des résines selon l'invention on effectue le test suivant :
On fabrique des plaques de dimensions 300 x 300 $mm^2$ et d'épaisseur 30mm que l'on soumet à une agression thermique selon la norme ISO 834 sur une face et l'on détermine le temps nécessaire pour que l'autre face, arrière, atteigne les températures de 100° et 170°.

Les plaques sont obtenues en introduisant dans un moule, les compositions ci-après de résines, préparées comme indiqué dans les exemples précédents.

Sur les faces supérieure et inférieure du moule on place préalablement un mat de verre classique à 300$g/m^2$ imprégné d'une des résines minérales de l'invention présentant un durcissement rapide et sur ce mat une couche d'environ 0,2 millimètre d'épaisseur constituée par des paillettes de verre métallique de longueur 30mm, FIBRAFLEX vendu par la société SEVA. Le moule est placé entre les plateaux d'une presse dont la température est de 100° C. On exerce une pression de 2 à 3 bars (0,2 à 0,3MPa) afin de faire fluer la matière et de remplir le moule qui est complètement fermé.

Les résultats sont indiqués dans le tableau III ci-après.

Exemples 11 et 12

Afin de montrer la propriété de protection thermique des résines selon l'invention lors d'une agression thermique brutale de 850° C pendant 10 minutes on effectue le test suivant :
On remplace la porte d'un four électrique porté à 850° C par une plaque d'épaisseur comprise entre 10,5 et 11 mm et on laisse cette plaque en place pendant 10 minutes. On écarte ensuite la plaque du four et on relève la température maximale atteinte par la face non exposée.

Les plaques sont réalisées comme précédemment par introduction dans un moule des compositions résineuses préparées comme indiqué dans les exemples 1 à 8. Seule la face placée du côté de l'agression thermique et les côtés comportent éventuellement un réflecteur constitué par un mat de verre à 50$g/m^2$ imprégné d'une résine minérale selon l'invention à durcissement rapide et par une couche d'environ 0,2 mm d'épaisseur de paillettes FIBRAFLEX de longueur 15mm.

Les résultats sont indiqués ci-dessous :

| Exemples | 11 | 12 |
|---|---|---|
| Précurseur poudre | A4 | A3 |
| Précurseur liquide | L2 | L7 |
| L/A | 2,93 | 2,93 |
| Charges (% massique par rapport à la masse totale résine plus charges) | SC (12) et P12 (12,7) | M (5) et P02505 (17) |
| Réflecteur | Oui | Non |
| Température maximale de la face non exposée | 235° C | 216° C |

Exemples 13 et 14

On prépare des résines contenant comme éléments alcalins du potassium et du lithium, selon le mode opératoire décrit dans les exemples 1 à 8.

Le lithium est introduit sous forme de lithine (Li0H) en poudre.

La préparation du précurseur liquide s'opère par dissolution complète des ingrédients dans l'ordre suivant :

- 1 Dissolution de la lithine dans l'eau,
- 2 Ajout de la potasse,
- 3 Ajout du silicate de potassium en poudre ou sous forme liquide,
- 4 Ajout de l'acide orthoborique.

A chaque opération, il faut attendre que les différents composés formés se dissolvent. Ces opérations se déroulent à froid, le chauffage entraînant la formation d'espèces insolubles.

Les caractéristiques des résines sont les suivantes :

| EXEMPLES | 13 | 14 |
|---|---|---|
| Référence de la poudre | A4 | A4 |
| Précurseur liquide | | |
| h | 108,3 | 108,3 |
| $n_K$ | 35 | 35 |
| $m_K$ | 46,7 | 46,7 |
| $m_L$ | 5,6 | 7,2 |
| aob | 35 | 35 |
| L/A | 2,5 | 2,5 |
| S ; KT ; H | 3,0;1,6;20,2 | 3,0;1,7;20,2 |
| B | 0,7 | 0,7 |
| Composition de prise en masse | R | R |
| Aspect des monolithes après démoulage | a | a |
| Temps de prise à 60°C | 24 heures | 24 heures |

- $m_L$ représente la quantité en grammes de lithine contenue dans le précurseur liquide
- KT représente le rapport molaire $Li_2O + K_2O/Al_2O_3$

## TABLEAU I

| EXEMPLE | 1 | 2 | 3 | 4 |
|---|---|---|---|---|
| REFERENCE DE LA POUDRE | A1 | A3 | A4 | A1 |
| REFERENCE DU LIQUIDE | L1 | L2 * | L3 * | L4 * |
| h | 100 | 100 | 100 | 100 |
| $n_K$ | 65,6 | 65,6 | 0 | 65,6 |
| $m_K$ | 54,6 | 197,8 | 197,5 | 217,8 |
| aob | 30 | 90 | 90 | 130 |
| L/A | 2 | 2,93 | 2,93 | 3,22 |
| S;K;H | 3,8;1,5;15,9 | 3,1;3,0;15,8 | 2,2;3,2;17,3 | 3,5;3,6;19,1 |
| B | 0,51 | 1,1 | 1,3 | 1,8 |
| COMPOSITION DE PRISE EN MASSE | R | R,ATH,M,Bx,(Bx-M),(Bx-ATH) | R,M,C,SC,(SM-C) | R,P24 |
| ASPECT DES MONOLITHES APRES DEMOULAGE | a | a, a, a, a, a, a | b,b, b, b, b | a, a |
| TEMPS DE PRISE INFERIEUR A 5 HEURES A 60° C | Oui | Oui | Non | Oui |

Le signe * indique qu'un précipité blanc s'est formé dans la solution liquide

EP 0 633 231 B1

TABLEAU II

| EXEMPLE | 5 | 6 | 7 | 8 |
|---|---|---|---|---|
| REFERENCE DE LA POUDRE | A1 | A1 | A3 | A4 |
| REFERENCE DU LIQUIDE | L5 | L6 | L7 * | L8 * |
| h | 100 | 100 | 100 | 100 |
| $n_N$ | 22 | 30 | 0 | 0 |
| $m_K;m_N$ | 0;30 | 0;36 | 0;53 | 67;47 |
| aob | 23 | 32 | 36 | 60 |
| L/A | 2,53 | 2,53 | 2,94 | 2,93 |
| S;NK;H | 3,4;1,8;26,2 | 3,6;1,9;24,5 | 2,2;2,5;26,6 | 2,2;3,0;21,2 |
| B | 0,7 | 0,9 | 1,1 | 1,3 |
| COMPOSITION DE PRISE EN MASSE | R,ATH,P12,P24 | R,Z,ATH | R,M,Bx,(M-P12) | R,C,M,SC,(SM-C) |
| ASPECT DES MONOLITHES APRES DEMOULAGE | a, a, a, a | a,a, a | b,b,b, a | b,b,b,b, b |
| TEMPS DE PRISE INFERIEUR A 5 HEURES A 60° C | Non | Oui | Non | Non |

Le signe * indique qu'un précipité blanc s'est formé dans la solution liquide

EP 0 633 231 B1

TABLEAU III

| EXEMPLE | 9 | 10 |
|---|---|---|
| PRECURSEUR LIQUIDE | L2 | L7 |
| PRECURSEUR POUDRE | A2 | A2 |
| L/A | 2,93 | 2,94 |
| CHARGES (% EN MASSE PAR RAPPORT A LA MASSE DE LA RESINES PLUS LES CHARGES) | P24 (50%) | Bx (8%) P24 (42%) |
| DENSITE AVANT ESSAI | 0,76 | 0,68 |
| MASSE SURFACIQUE AVANT ESSAI | 23 kg/m$^2$ | 20,5 kg/m$^2$ |
| DEGRE COUPE-FEU SELON ISO 834 (heures, minutes) | 1H03 | 1H00 |
| TEMPS POUR ATTEINDRE 100° | 53 min | 53 min |

**Revendications**

1.  Résines minérales durcissables, caractérisées en ce qu'elles sont à base de boroaluminosilicates alcalins et qu'elles comprennent, avant durcissement, les éléments minéraux à l'état réactif, le bore pouvant être aussi en état de sursaturation, dans les proportions suivantes exprimées par leur rapport molaire d'oxydes :

    $$2 \leq SiO_2/Al_2O_3 \leq 4$$
    $$1,3 \leq X_2O/Al_2O_3 \leq 3,8$$
    $$10 \leq H_2O/Al_2O_3 \leq 28$$
    $$0,5 < B_2O_3/Al_2O_3 \leq 2,0$$

    $X_2O$ représentant un ou plusieurs oxydes alcalins choisis parmi $Na_2O$, $K_2O$ et $Li_2O$.

2.  Résines minérales selon la revendication 1, caractérisées en ce que $X_2O$ représente $Na_2O$, $K_2O$ ou un mélange de $Na_2O$ et de $K_2O$ ou de $Li_2O$ et de $Na_2O$ ou de $Li_2O$ et de $K_2O$ ou de $Li_2O$, de $Na_2O$ et de $K_2O$.

3.  Résines minérales selon la revendication 1, caractérisées en ce que les rapports molaires des oxydes ont les valeurs suivantes :

    $$3,0 \leq SiO_2/Al_2O_3 \leq 3,8$$
    $$1,5 \leq X_2O/Al_2O_3 \leq 3,6$$
    $$13,0 \leq H_2O/Al_2O_3 \leq 19,5$$
    $$0,5 < B_2O_3/Al_2O_3 \leq 1,8$$

    $X_2O$ représentant $K_2O$ ou

    $$2,0 \leq SiO_2/Al_2O_3 \leq 3,9$$
    $$1,4 \leq X_2O/Al_2O_3 \leq 3,0$$
    $$10 \leq H_2O/Al_2O_3 \leq 28,0$$
    $$0,5 < B_2O_3/Al_2O_3 \leq 1,3$$

    $X_2O$ représentant $Na_2O$ ou un mélange de $Na_2O$ et $K_2O$.

4.  Résines minérales selon la revendication 1, caractérisées en ce qu'elles contiennent une ou plusieurs charges choisies parmi les charges minérales, métalliques et/ou organiques.

5.  Résines minérales selon la revendication 1 ou 4, caractérisées en ce qu'elles contiennent une ou plusieurs charges minérales, de préférence choisies parmi les sulfates, les oxydes et les hydroxydes d'alcalino-terreux, l'alumine, les hydrates d'alumine, l'oxyde de zinc, le borax et les aluminosilicates.

6. Résines minérales selon la revendication 1 ou 4, caractérisées en ce qu'elles sont sous forme durcie.

7. Procédé de préparation des résines minérales selon la revendication 1, caractérisé en ce qu'on effectue un mélange homogène des deux précurseurs suivants préparés séparément :

I) un précurseur qui est une poudre constituée d'un aluminosilicate obtenu par amorphisation d'une argile 1 : 1 dans laquelle le rapport atomique $\frac{Si}{Al}$ est égal à 1 ;
II) Un précurseur liquide qui est une solution aqueuse alcaline contenant, à l'état dissous, au moins un élément alcalin choisi parmi le sodium, le potassium et le lithium, du bore et éventuellement du silicium, le bore pouvant être présent en quantité supérieure à sa saturation ;

les quantités des différents constituants étant déterminées pour que leurs rapports molaires dans le mélange exprimés en terme d'oxyde aient les valeurs suivantes :

$2 \leq SiO_2/Al_2O_3 \leq 4$
$1,3 \leq X_2O/Al_2O_3 \leq 3,8$
$10 \leq H_2O/Al_2O_3 \leq 28$
$0,5 < B_2O_3/Al_2O_3 \leq 2,0$

$X_2O$ représentant un ou plusieurs oxydes alcalins choisis parmi $Na_2O$, $K_2O$ et $Li_2O$.

8. Procédé selon la revendication 7, caractérisé en ce que $X_2O$ représente $Na_2O$, $K_2O$ ou un mélange de $Na_2O$ et de $K_2O$ ou de $Li_2O$ et de $Na_2O$ ou de $Li_2O$ et de $K_2O$ ou de $Li_2O$, de $Na_2O$ et de $K_2O$.

9. Procédé selon la revendication 7, caractérisé en ce que les rapports molaires des oxydes ont les valeurs suivantes :

$3,0 \leq SiO_2/Al_2O_3 \leq 3,8$
$1,5 \leq X_2O/Al_2O_3 \leq 3,6$
$13,0 \leq H_2O/Al_2O_3 \leq 19,5$
$0,5 < B_2O_3/Al_2O_3 \leq 1,8$

$X_2O$ représentant $K_2O$ ou

$2,0 \leq SiO_2/Al_2O_3 \leq 3,9$
$1,4 \leq X_2O/Al_2O_3 \leq 3,0$
$10 \leq H_2O/Al_2O_3 \leq 28,0$
$0,5 < B_2O_3/Al_2O_3 \leq 1,3$

$X_2O$ représentant $Na_2O$ ou un mélange de $Na_2O$ et $K_2O$.

10. Procédé selon la revendication 7, caractérisé en ce que l'amorphisation de l'argile est obtenue par traitement avec des acides forts et concentrés et/ou par traitement thermique.

11. Procédé selon la revendication 7, caractérisé en ce que l'on fait durcir les résines en présence de la totalité de l'eau qu'elles contiennent, à une température comprise entre 0° et 150° C.

12. Procédé selon la revendication 11, caractérisé en ce qu'avant durcissement la résine est mélangée avec une ou des charges minérales, métalliques et/ou organiques ou est utilisée pour imprégner des fibres ou des matériaux comprenant des fibres.

13. Procédé selon la revendication 11, caractérisé en ce qu'avant durcissement la résine est mélangée avec une ou plusieurs charges minérales, de préférence choisies parmi les sulfates, les oxydes et les hydroxydes d'alcalino-terreux, l'alumine, les hydrates d'alumine, l'oxyde de zinc, le borax et les aluminosilicates.

14. Objet caractérisé en ce qu'il contient une résine selon la revendication 1,4 ou 6.

15. Matériaux pour la protection thermique, caractérisés en ce qu'ils sont obtenus par moulage et durcissement d'une résine selon la revendication 1 ou 4.

**16.** Matériaux selon la revendication 15, caractérisés en ce que sur une ou plusieurs faces du matériau est lié un élément réflecteur de chaleur constitué par une couche très fine de mica ou de paillettes de verre métallique placée sur la ou les face(s) du matériau et maintenue par un mat de verre imprégné d'une résine non chargée telle que décrite dans la revendication 1 et durcie pour effectuer la liaison.

**Claims**

1. Hardenable inorganic resins, characterized in that they are based on alkaline boroaluminosilicates and in that they contain, before hardening, inorganic elements in the reactive state, boron being also capable of being in a supersaturated state, in the following proportions expressed by the molar ratio of their oxides :

$$2 \leq SiO_2/Al_2O_3 \leq 4$$
$$1.3 \leq X_2O/Al_2O_3 \leq 3.8$$
$$10 \leq H_2O/Al_2O_3 \leq 28$$
$$0.5 < B_2O_3/Al_2O_3 \leq 2.0$$

$X_2O$ representing one or more alkali metal oxides selected from $Na_2O$, $K_2O$ and $Li_2O$

2. Inorganic resins according to claim 1, characterized in that $X_2O$ represents $Na_2O$, $K_2O$ or a mixture of $Na_2O$ and $K_2O$ or of $Li_2O$ and $Na_2O$ or of $Li_2O$ and $K_2O$ or of $Li_2O$, $Na_2O$ and $K_2O$.

3. Inorganic resins according to claim 1, characterized in that the molar ratios of the oxides have the following values :

$$3.0 \leq SiO_2/Al_2O_3 \leq 3.8$$
$$1.5 \leq X_2O/Al_2O_3 \leq 3.6$$
$$13.0 \leq H_2O/Al_2O_3 \leq 19.5$$
$$0.5 < B_2O_3/Al_2O_3 \leq 1.8$$

$X_2O$ representing $K_2O$ or

$$2.0 \leq SiO_2/Al_2O_3 \leq 3.9$$
$$1.4 \leq X_2O/Al_2O_3 \leq 3.0$$
$$10.0 \leq H_2O/Al_2O_3 \leq 28.0$$
$$0.5 < B_2O_3/Al_2O_3 \leq 1.3$$

$X_2O$ representing $Na_2O$ or a mixture of $Na_2O$ and $K_2O$.

4. Inorganic resins according to claim 1, characterized in that they contain one or more fillers selected from inorganic, metallic and/or organic fillers.

5. Inorganic resins according to claim 1 or 4, characterized in that they contain one or more inorganic fillers, preferably selected from the sulphates, oxides and hydroxides of alkaline earths, alumina, alumina hydrates, zinc oxide, borax and aluminosilicates.

6. Inorganic resins according to claim 1 or 4, characterized in that they are in the hardened form.

7. Process for preparing inorganic resins according to claim 1, characterized in that a homogeneous mixture is prepared of the following two precursors, prepared separately :

I) a precursor which is a powder consisting of an aluminosilicate obtained by amorphization of a 1 : 1 clay in which the atomic ratio Si/Al is equal to 1 ;

II) a liquid precursor which is an alkaline aqueous solution containing, in the dissolved state, at least one alkali metal element selected from sodium, potassium and lithium, boron and possibly silicon, it being possible for boron to be present in a quantity greater than its saturation quantity ;

the quantities of the various constituents being determined so that their molar ratios in the mixture, expressed in terms of the oxides, have the following values :

$$2.0 \leq SiO_2/Al_2O_3 \leq 4$$
$$1.3 \leq X_2O/Al_2O_3 \leq 3.8$$
$$10 \leq H_2O/Al_2O_3 \leq 28$$
$$0.5 < B_2O_3/Al_2O_3 \leq 2.0$$

$X_2O$ representing one or more alkali metal oxides selected from $Na_2O$, $K_2O$ and $Li_2O$.

8. Process according to claim 7, characterized in that $X_2O$ represents $Na_2O$, $K_2O$ or a mixture of $Na_2O$ and $K_2O$ or of $Li_2O$ and $Na_2O$ or of $Li_2O$ and $K_2O$ or of $Li_2O$, $Na_2O$ and $K_2O$.

9. Process according to claim 7 characterized in that the molar ratios of the oxides have the following values :

$$3.0 \leq SiO_2/Al_2O_3 \leq 3.8$$
$$1.5 \leq X_2O/Al_2O_3 \leq 3.6$$
$$13.0 \leq H_2O/Al_2O_3 \leq 19.5$$
$$0.5 < B_2O_3/Al_2O_3 \leq 1.8$$

$X_2O$ representing $K_2O$ or

$$2.0 \leq SiO_2/Al_2O_3 \leq 3.9$$
$$1.4 \leq X_2O/Al_2O_3 \leq 3.0$$
$$10.0 \leq H_2O/Al_2O_3 \leq 28.0$$
$$0.5 < B_2O_3/Al_2O_3 \leq 1.3$$

$X_2O$ representing $Na_2O$ or a mixture of $Na_2O$ and $K_2O$.

10. Process according to claim 7 characterized in that amorphization of clay is obtained by treatment with concentrated strong acids and/or by heat treatment.

11. Process according to claim 7, characterized in that the resins are hardened in the presence of all the water that they contain, at a temperature of between 0°C and 150°C.

12. Process according to claim 11, characterized in that before hardening, the resin is mixed with one or more inorganic, metallic and/or organic fillers or is used to impregnate fibres or fibre-containing materials.

13. Process according to claim 11, characterized in that before hardening, the resin is mixed with one or more inorganic fillers, preferably selected from the sulphates, oxides and hydroxides of alkaline earths, alumina, alumina hydrates, zinc oxide, borax and aluminosilicates.

14. Object characterized in that it contains a resin according to claim 1, 4 or 6.

15. Materials for heat protection, characterized in that they are obtained by moulding and hardening a resin according to claim 1 or 4.

16. Materials according to claim 15, characterized in that there is attached to one or more faces of the material a heat reflecting component consisting of a very fine layer of mica or of metallic glass flakes placed on the face or faces of the material and held by a glass mat impregnated with an unfilled resin such as is described in claim 1 and hardened to achieve the bond.

**Patentansprüche**

1. Härtbare anorganische Harze, dadurch gekennzeichnet, daß es sich um Harze auf der Basis von Alkaliboraluminosilicaten handelt und daß sie vor der Härtung die anorganischen Elemente in reaktivem Zustand, wobei das Bor außerdem in übersättigtem Zustand vorliegen kann, in den folgenden Anteilen, ausgedrückt durch das Molverhältnis der Oxide, enthalten:

$$2 \leq SiO_2/Al_2O_3 \leq 4$$
$$1,3 \leq X_2O/Al_2O_3 \leq 3,8$$
$$10 \leq H_2O/Al_2O_3 \leq 28$$
$$0,5 < B_2O_3/Al_2O_3 \leq 2,0 \, ,$$

wobei $X_2O$ ein oder mehrere Alkalioxide darstellt, die unter $Na_2O$, $K_2O$ und $Li_2O$ ausgewählt sind.

2. Anorganische Harze nach Anspruch 1, dadurch gekennzeichnet, daß $X_2O$ $Na_2O$, $K_2O$ oder ein Gemisch von $Na_2O$ und $K_2O$ oder von $Li_2O$ und $Na_2O$ oder von $Li_2O$ und $K_2O$ oder von $Li_2O$, $Na_2O$ und $K_2O$ darstellt.

3. Anorganische Harze nach Anspruch 1, dadurch gekennzeichnet, daß die Molverhältnisse der Oxide die folgenden Werte aufweisen:

$$3,0 \leq SiO_2/Al_2O_3 \leq 3,8$$
$$1,5 \leq X_2O/Al_2O_3 \leq 3,6$$
$$13,0 \leq H_2O/Al_2O_3 \leq 19,5$$
$$0,5 < B_2O_3/Al_2O_3 \leq 1,8 \, ,$$

wobei $X_2O$ $K_2O$ darstellt oder

$$2,0 \leq \$iO_2/Al_2O_3 \leq 3,9$$
$$1,4 \leq X_2O/Al_2O_3 \leq 3,0$$
$$10 \leq H_2O/Al_2O_3 \leq 28,0$$
$$0,5 < B_2O_3/Al_2O_3 \leq 1,3,$$

wobei $X_2O$ $Na_2O$ oder ein Gemisch von $Na_2O$ und $K_2O$ darstellt.

4. Anorganische Harze nach Anspruch 1, dadurch gekennzeichnet, daß sie einen oder mehrere Füllstoffe enthalten, die unter anorganischen, metallischen und/oder organischen Füllstoffen ausgewählt sind.

5. Anorganische Harze nach Anspruch 1 oder 4, dadurch gekennzeichnet, daß sie einen oder mehrere anorganische Füllstoffe enthalten, die vorzugsweise unter Erdalkalisulfaten, Erdalkalioxiden und Erdalkalihydroxiden, Aluminiumoxid, Aluminiumoxidhydraten, Zinkoxid, Borax und Aluminosilicaten ausgewählt sind.

6. Anorganische Harze nach Anspruch 1 oder 4, dadurch gekennzeichnet, daß sie in gehärteter Form vorliegen.

7. Verfahren zur Herstellung anorganischer Harze nach Anspruch 1, dadurch gekennzeichnet, daß ein homogenes Gemisch der beiden folgenden, getrennt hergestellten Vorläufer hergestellt wird:

I) ein Vorläufer, bei dem es sich um ein Pulver handelt, das aus einem Aluminosilicat besteht, der durch Amorphisierung eines 1:1-Tons, bei dem das Atomverhältnis Si/Al 1 beträgt, hergestellt wird,
II) ein flüssiger Vorläufer, bei dem es sich um eine alkalihaltige wäßrige Lösung handelt, der in gelöster Form mindestens ein Alkalielement, das unter Natrium, Kalium und Lithium ausgewählt ist, Bor und gegebenenfalls Silicium enthält, wobei das Bor in einer Menge enthalten sein kann, die oberhalb seiner Sättigung liegt,

wobei die Mengen der verschiedenen Bestandteile so festgelegt sind, daß ihre Molverhältnisse in dem Gemisch, angegeben für die Oxide, die folgenden Werte aufweisen:

$$2 \leq SiO_2/Al_2O_3 \leq 4$$
$$1,3 \leq X_2O/Al_2O_3 \leq 3,8$$
$$10 \leq H_2O/Al_2O_3 \leq 28$$
$$0,5 < B_2O_3/Al_2O_3 \leq 2,0,$$

wobei $X_2O$ ein oder mehrere Alkalioxide darstellt, die unter $Na_2O$, $K_2O$ und $Li_2O$ ausgewählt werden.

8. Verfahren nach Anspruch 7, dadurch gekennzeichnet, daß $X_2O$ $Na_2O$, $K_2O$ oder ein Gemisch von $Na_2O$ und $K_2O$ oder von $Li_2O$ und $Na_2O$ oder von $Li_2O$ und $K_2O$ oder von $Li_2O$, $Na_2O$ und $K_2O$ darstellt.

9. Verfahren nach Anspruch 7, dadurch gekennzeichnet, daß das Molverhältnis der Oxide die folgenden Werte aufweist:

$$3,0 \leq SiO_2/Al_2O_3 \leq 3,8$$
$$1,5 \leq X_2O/Al_2O_3 \leq 3,6$$
$$13,0 \leq H_2O/Al_2O_3 \leq 19,5$$
$$0,5 < B_2O_3/Al_2O_3 \leq 1,8,$$

wobei $X_2O$ $K_2O$ darstellt, oder

$$2,0 \leq SiO_2/Al_2O_3 \leq 3,9$$
$$1,4 \leq X_2O/Al_2O_3 \leq 3,0$$
$$10 \leq H_2O/Al_2O_3 \leq 28,0$$
$$0,5 < B_2O_3/Al_2O_3 \leq 1,3,$$

wobei $X_2O$ $Na_2O$ oder ein Gemisch von $Na_2O$ und $K_2O$ darstellt.

10. Verfahren nach Anspruch 7, dadurch gekennzeichnet, daß die Amorphisierung des Tons durch Behandlung mit starken und konzentrierten Säuren und/oder durch thermische Behandlung erreicht wird.

11. Verfahren nach Anspruch 7, dadurch gekennzeichnet, daß die Harze in Gegenwart der gesamten Wassermenge, die sie enthalten, bei einer Temperatur von 0 bis 150 °C gehärtet werden.

12. Verfahren nach Anspruch 11, dadurch gekennzeichnet, daß das Harz vor der Härtung mit einem oder mehreren anorganischen, metallischen und/oder organischen Füllstoffen vermischt wird oder für die Imprägnierung von Fasern oder Fasern enthaltenden Materialien verwendet wird.

13. Verfahren nach Anspruch 11, dadurch gekennzeichnet, daß das Harz vor der Härtung mit einem oder mehreren anorganischen Füllstoffen, die vorzugsweise unter Erdalkalisulfaten, Erdalkalioxiden und Erdalkalihydroxiden, Aluminiumoxid, Aluminiumoxidhydraten, Zinkoxid, Borax und Aluminosilicaten ausgewählt werden, vermischt wird.

14. Gegenstand, dadurch gekennzeichnet, daß er ein Harz nach Anspruch 1, 4 oder 6 enthält.

15. Wärmeschutzmaterialien, dadurch gekennzeichnet, daß sie durch Formung und Härtung eines Harzes nach Anspruch 1 oder 4 hergestellt werden.

16. Materialien nach Anspruch 15, dadurch gekennzeichnet, daß auf einer oder mehreren Flächen des Materials ein wärmereflektierendes Element angebunden ist, das aus einer sehr dünnen Schicht aus Glimmer oder aus Plättchen aus metallischem Glas besteht, die auf der oder den Flächen des Materials angeordnet ist und dort durch eine Glasmatte gehalten wird, die mit einem Harz imprägniert ist, das keinen Füllstoff enthält und ein wie in Anspruch 1 beschriebenes Harz ist, das für die Erzeugung der Verbindung gehärtet ist.